# EUROPEAN PATENT APPLICATION

(11) **EP 4 745 653 A1**
(43) Date of publication of application: **20.05.2026**
(21) Application number: 24213161.3
(22) Date of filing: 15.11.2024
(51) Int. Cl.: G02C 5/22

(54) **EYEGLASSES ASSEMBLY STRUCTURE**

(71) Applicant: Bau-JI Optics Limited Company, Tainan City 710 (TW)
(72) Inventor: HSIAO, Shun-Tien, Tainan (TW)
(74) Representative: Zeitler Volpert Kandlbinder Patentanwälte

(57) **Abstract**

An eyeglasses assembly structure includes a lens frame and a pair of temples. The lens frame is provided with pivot seats on each side, the pivot seat includes a insert slot and a pivot hole. The front section of the temple is provided with a pivot body, which includes a contact surface, a sland surface, and a pivot post. The pivot body of the temple is interlocked with the insert slot of the lens frame, allowing the pivot post of the temple to be positioned in the pivot hole by means of lever mechanics. This design enables a rapid assembly without the need for metal screw components, making the eyewear structure environmentally friendly.

## Description

### BACKGROUND OF THE INVENTION

### 1. Field of the Invention

The invention relates to an eyeglasses assembly structure, especially to a more convenient and secure assembly of the lens frame and the temples.

### 2. Description of the Prior Art

All of the eyeglasses available on the market includes a frame and temples. The assembly of the frame and the temples is predominantly secured using screw components. However, the reliance on such screw components heightens the need for tools during the assembly process, which results in less-than-ideal variability and applicability for the user.

### SUMMARY OF THE INVENTION

Therefore, the objective of this invention is to provide a eyeglasses that can overcome the aforesaid drawbacks associated with the prior art.

The main characteristics of the invention is provided a lens frame, the lens frame is provided with a pivot seats on each side, each of the pivot seats has a slot, with groove along the sides of the slot, a pivot hole at the end of the groove, and an insertion opening between the groove and the pivot hole; a temples, each assembled on one side of the lens frame, with the front section of the temple has a pivot body, the pivot body includes a contact surface, a slant surface, and a pivot post, wherein the slant surface is positioned at the front end of the contact surface, and the angle between the slant surface and the pivot body forms a fulcrum.

### BRIEF DESCRIPTION OF DRAWINGS

This invention will be understood by referring to the accompanying drawings, wherein:
Fig. 1 is an exploded perspective view of the temple and lens frame in the present invention;
Fig. 2 is an assembled view of the temple and lens frame in the present invention;
Fig. 3 is an enlarged partial view of the pivot seat on the lens frame;
Fig. 4 is a top perspective view of the pivot seat;
Fig. 5 is an enlarged partial view of the pivot body on the temple;
Fig. 6 is a partial exploded perspective view of the temple and lens frame assembly in the present invention ;
Fig. 7 is a perspective view of the temple assembled into the lens frame in the present invention ;
Fig. 8 is a perspective view of the fully assembled temple and lens frame in the present invention;
Fig. 9 is a top perspective view of the groove for temple insertion in the lens frame;
Fig. 10 is a top perspective view of the pivot post moving along the push-pull slope as the temple is manipulated in the present invention ; and
Fig. 11 is a top perspective view of the temple fully assembled in the lens frame of the present invention.

### DETAILED DESCRIPTION OF THE PREFERRED EMBODIMENT

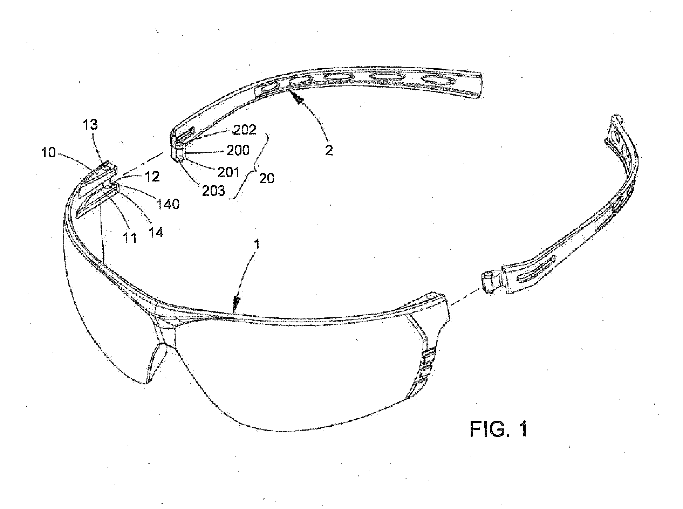

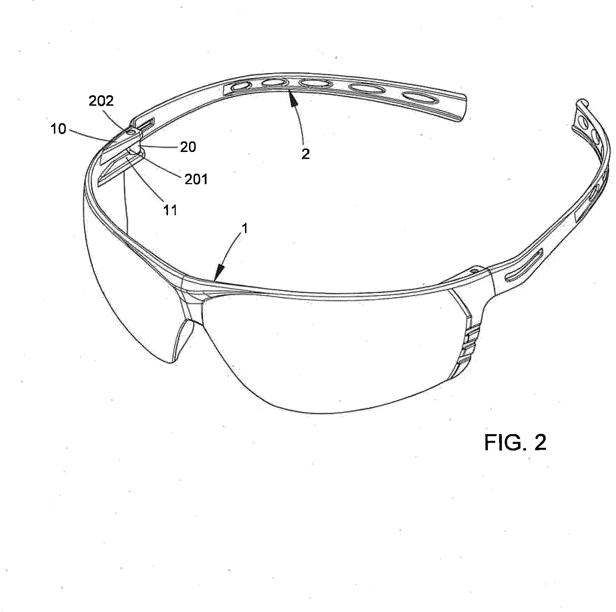

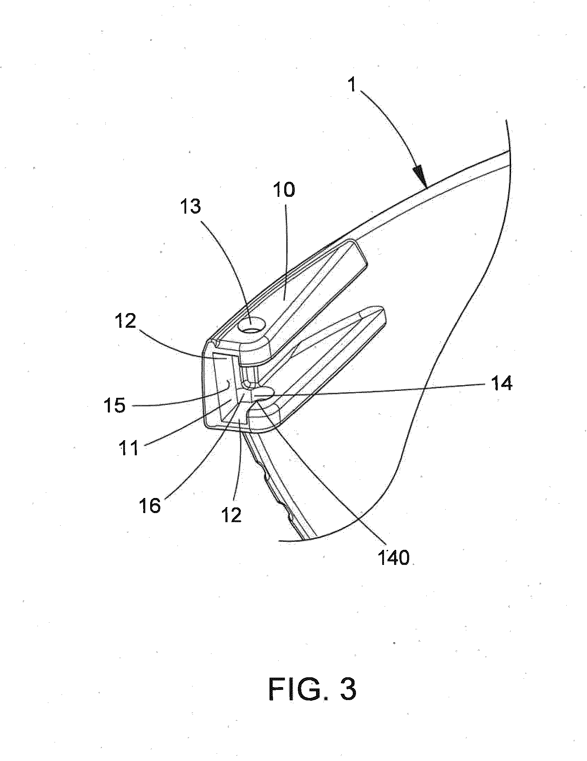

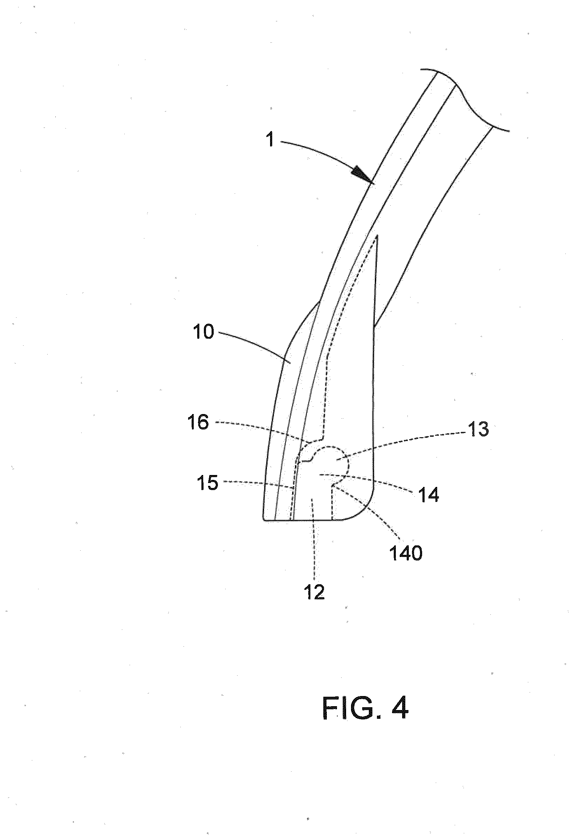

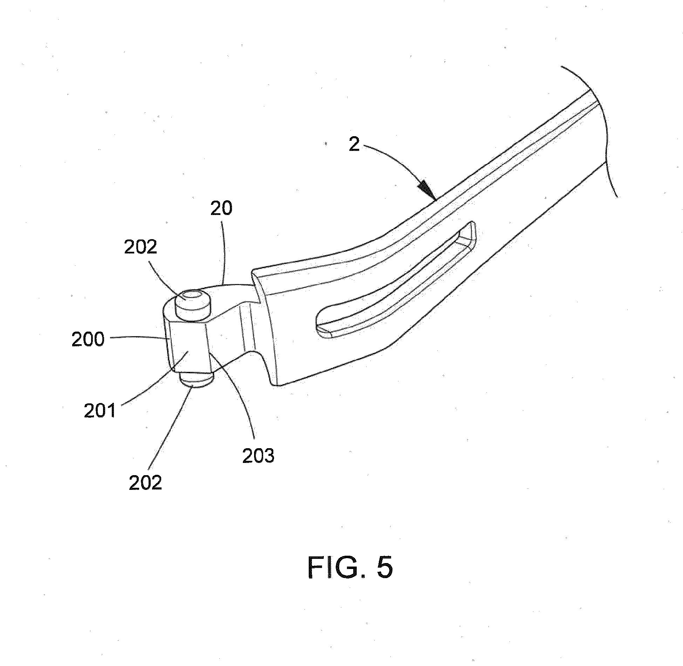

Referring to Figs. 1 to 5, the example of the present invention mainly consists of a lens frame 1 and temples 2. The lens frame 1 is includes a pivot seats 10 on each side. The pivot seat 10 includes a insert slot 11 with grooves 12 on each side of the insert slot 11. At the end of the groove 12 is a pivot hole 13. An insertion opening 14 is created between the groove 12 and the pivot hole 13, with a push-pull slope 140 on the outside of the insertion opening 14. Moreover, a first stopping surface 15 is installed on the opposite side of the insertion opening 14 on the groove 12,and a second stopping surface 16 in the end. The temple 2 is assembled within the pivot seat 10 on each side of the lens frame 1. The front section of the temple 2 extends into a pivot body 20, which includes with a contact surface 200, a slant surface 201, and a pivot post 202. One end of the slant surface 201 forms a fulcrum 203, allowing the temple 2 to act as a lever arm. The pivot post 202 aligns with the insertion opening 14, forming as a resistance point. The diameter of the pivot post 202 is slightly larger than that of the insertion opening 14 of the pivot seat 10.

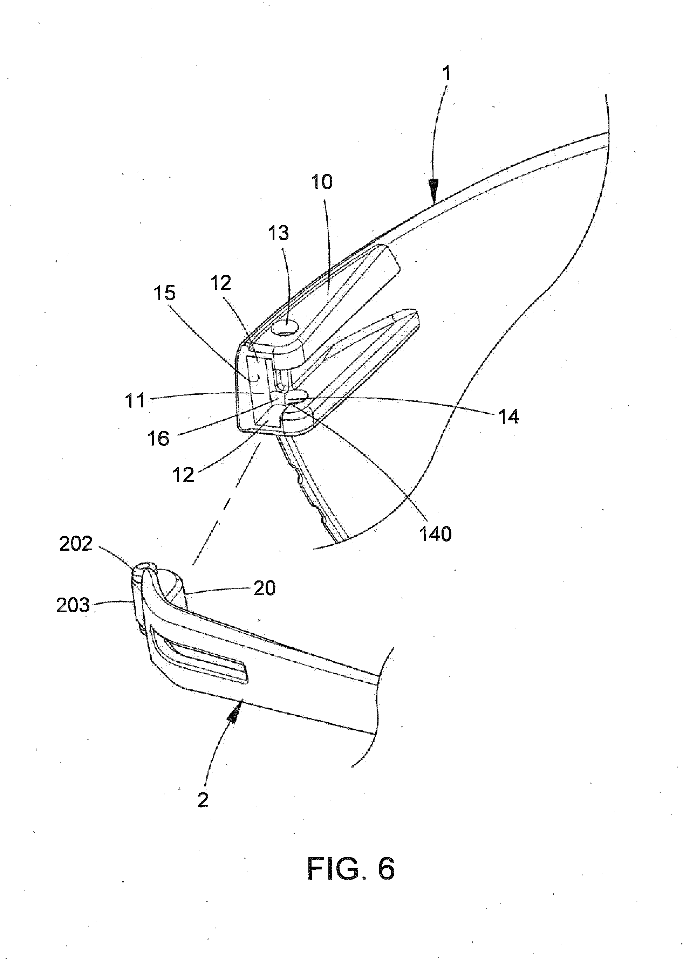

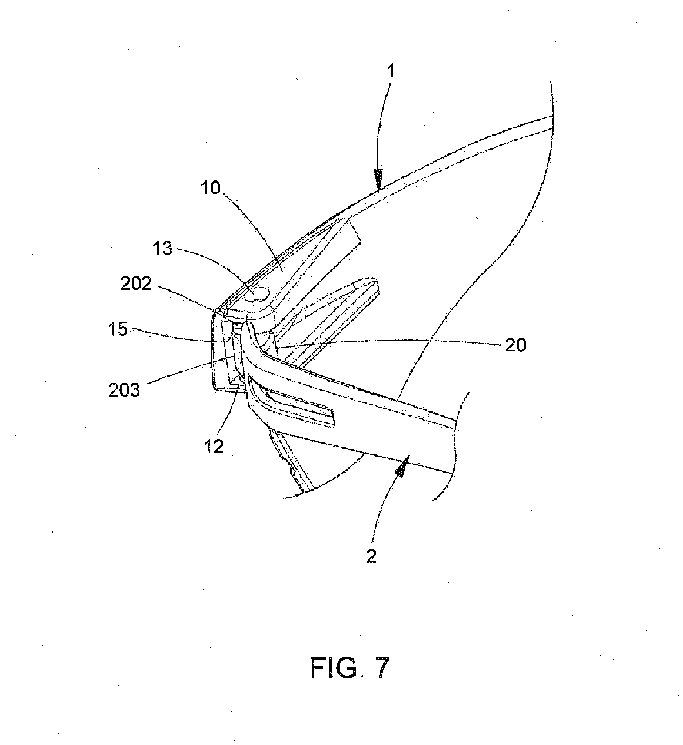

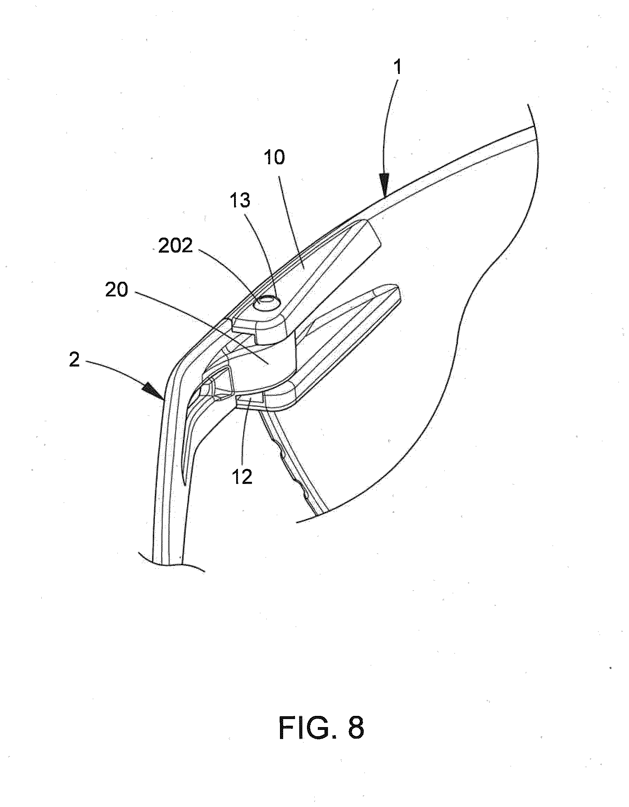

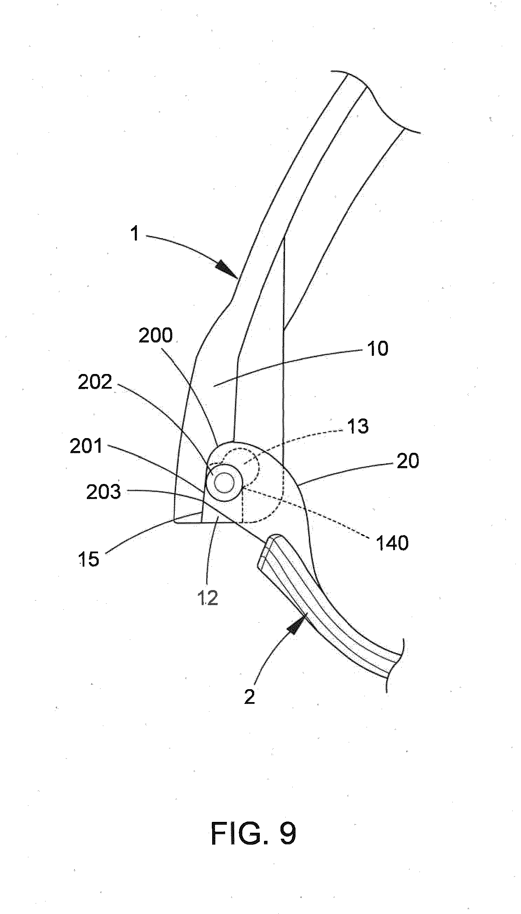

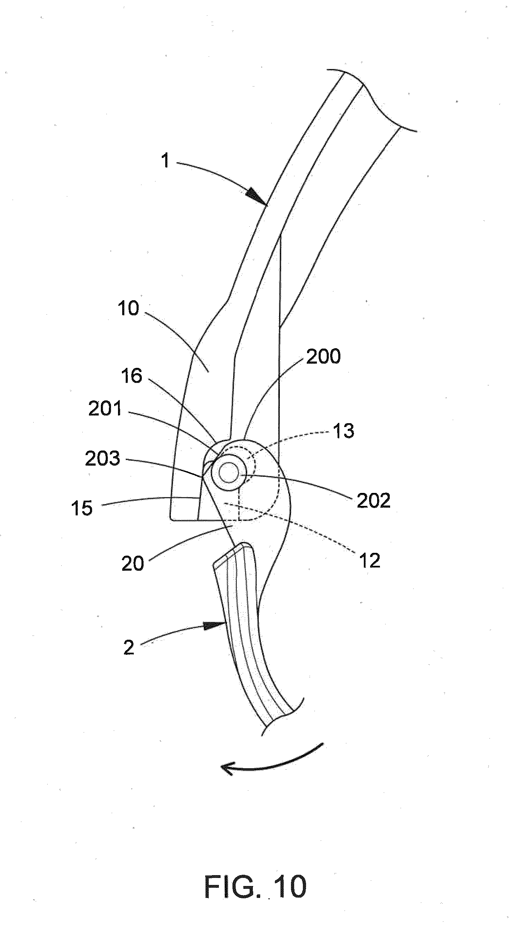

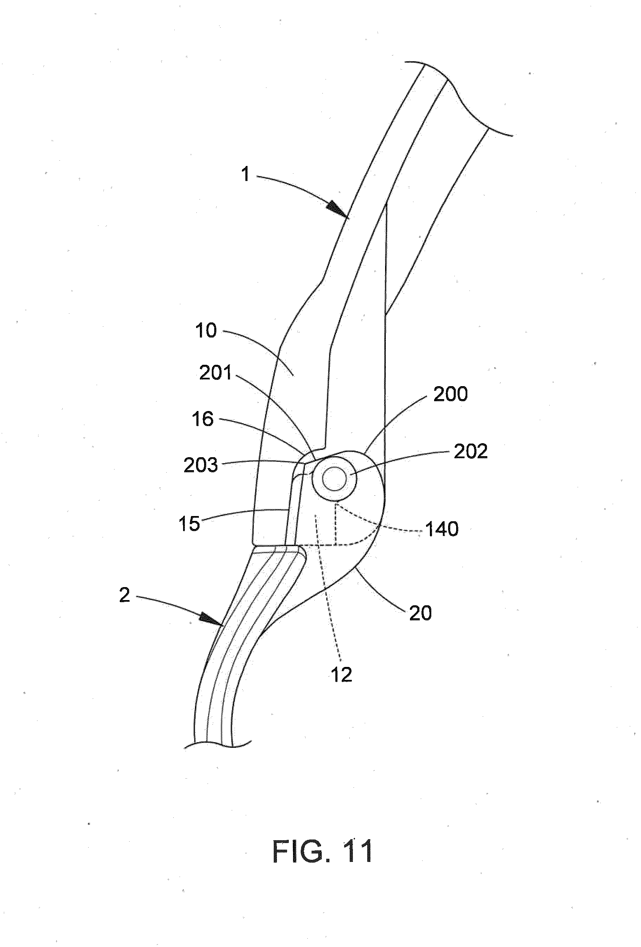

To assemble the present invention, as shown in Figs. 6 to 11, the slant surface 201 of the pivot body 20 is first aligned with the inner surface of the groove 12 on the pivot seat 10 of the lens frame 1. The pivot post 202 is then inserted into the groove 12 so that the contact surface 200 rests against the first stopping surface 15 inside the pivot seat 10. The temple 2 is pushed further, causing the slant surface 201 of the pivot body 20 to slide to the second stopping surface 16 of the groove 12. Finally, the temple 2 is manipulated outward, forcing the pivot post 202 into the pivot hole 13 through the push-pull slope 140 of the insertion opening 14, achieving secure positioning. Utilizing lever mechanics, this invention only requires minimal force to press the pivot post 202 into the insertion opening 14. As a result, the pivot body 20 of the temple 2 to be firmly pivoted within the pivot seat 10 of the lens frame 1. With the contact surface 200 of the temple 2 pressed against the first stopping surface 15 of the pivot seat 10, the pivot post 202 remains securely fixed, preventing any unintended slippage from the insertion opening 14, thereby providing a stable pivot connection between the lens frame 1 and the temple 2.

The invention has the following advantages as can be seen from the foresaid description.
1. The assembly of the lens frame 1 and the temples 2 can be completed without screw components or tools, which is truly convenient. This allows the user to easily achieve different visual styles.
2. The diameter of the pivot hole 13 of the lens frame 1 is approximately equal to the diameter of the pivot post 202 of the temple 2. Therefore, when the pivot post 202 of the temple 2 is pressed into the insertion opening 14 and fits into the pivot hole 13 of the lens frame 1, the lens frame 1 and the temple 2 are securely positioned without slippage, ensuring user safety.
3. Both the lens frame 1 and the temples 2 are directly joined using plastic material, which spares the need for metal screw components. This design meets environmental and carbon reduction standards and facilitates recycling.
4. The connection between the lens frame 1 and the temples 2 is achieved through the contact surface 200 and slant surface 201 of the temple 1. Leveraged force is applied to the temple 1 to ensure a smooth and easy assembly.

While the preferred embodiment of the invention has been described above, it will be recognized and understood that various modifications may be made therein and the appended claims are intended to cover all such modifications that may fall within the spirit and scope of the invention.

## Claims

1. A eyeglasses assembly structure comprising:
a lens frame, said lens frame is provided with a pivot seats on each side, each of said pivot seat has a slot, with grooves along the sides of said slot, a pivot hole at the end of said groove, and an insertion opening between said groove and said pivot hole; and a temples, each assembled on one side of said lens frame, with the front section of said temple has a pivot body, said pivot body includes a contact surface, a slant surface, and a pivot post, and the angle between said slant surface and said pivot body forms a fulcrum.

2. The eyeglasses assembly structure as claimed in claim 1, wherein the width of the said groove of said slot is approximately equal to the diameter of said pivot post of said temple.

3. The eyeglasses assembly structure as claimed in claim 1, wherein the diameter of said pivot hole of said lens frame is approximately equal to the diameter of said pivot post of said temple.

4. The eyeglasses assembly structure as claimed in claim 1, wherein the opening of said insertion opening of said lens frame is smaller than the diameter of said pivot post, and said insertion opening is provided with a push-pull slope.
